# EUROPÄISCHE PATENTSCHRIFT

(11) **EP 2 229 298 B1**
(45) Veröffentlichungstag und Bekanntmachung des Hinweises auf die Patenterteilung: **26.12.2012**
(21) Anmeldenummer: 08749729.3
(22) Anmeldetag: 25.04.2008
(51) Int. Cl.: H04W 4/22, H04L 29/08, B60R 25/00, G08B 25/01, B60R 25/10, H04W 4/20, H04W 76/00

(54) **VERFAHREN UND SYSTEM ZUM ABSETZEN EINES NOTRUFS**
METHOD AND SYSTEM FOR TRANSMITTING AN EMERGENCY CALL
PROCÉDÉ ET SYSTÈME POUR ENVOYER UN APPEL DE SECOURS

(30) Priorität: 06.12.2007 DE 102007059025
(43) Veröffentlichungstag der Anmeldung: 22.09.2010
(73) Patentinhaber: Continental Teves AG & Co. oHG, 60488 Frankfurt (DE)
(72) Erfinder: STÄHLIN, Ulrich, 65760 Eschborn (DE)
(86) Internationale Anmeldenummer: PCT/EP2008/055065
(87) Internationale Veröffentlichungsnummer: WO 2009/071338

(56) Entgegenhaltungen:
- EP-A- 1 494 492
- US-A1- 2005 030 224

## Beschreibung

Die vorliegende Erfindung betrifft das Absetzen eines Notrufes von einem verunfallten Fahrzeug an eine Rettungsleitstelle. Insbesondere betrifft die Erfindung ein System zum Absetzen eines solchen Notrufes, ein korrespondierendes Verfahren sowie auch ein hiermit im Zusammenhang stehendes Computerprogrammprodukt, ein computerlesbares Medium sowie eine dieses beinhaltende elektronische Einrichtung an Bord eines Fahrzeuges.

Im Straßenverkehr steigt die Verkehrsdichte an Kraftfahrzeugen stetig an. Hinsichtlich seiner Kapazität stößt das Straßennetz an seine Ausbaugrenzen. Dies führt zu einem analog hierzu wachsenden Unfallrisiko. Das Unfallrisiko kann zwar mit modernen Fahrassistenzsystemen und dergleichen minimiert, jedoch nicht ausgeschlossen werden. Im Falle eines Verkehrsunfalls ist insbesondere eine schnelle medizinische Hilfe geschädigter Personen vor Ort erforderlich. Das Einsatzgebiet der vorliegenden Erfindung erstreckt sich auf eine zu eben diesem Zwecke geschaffene systemtechnische Unfalllogistik.

Im allgemeinen Stand der Technik ist ein automatisches Notrufsystem mit der Bezeichnung "cCall" bekannt, bei welchem im Falle eines Unfalls automatisch eine Meldung an eine Rettungsleitstelle abgesetzt wird. Hierfür sind die Fahrzeuge mit elektronischen Geräten, so genannte Unfallüberwachungseinheiten, ausgestattet. Bei der Unfallüberwachungseinheit handelt es sich um eine an das Bordnetz des Fahrzeuges angeschlossene Elektronikbox, an die eingangsseitig ein Unfallsensor angeschlossen ist. Beim Unfallsensor kann es sich im einfachsten Falle um einen Beschleunigungssensor handeln, der ab einem vorgebbaren Schwellwert einer negativen Beschleunigung des Fahrzeuges, der oberhalb der durch die normale Bremskräfte des Fahrzeuges verursachten negativen Beschleunigungen liegt, ein Unfallsignal ausgibt. Hieraufhin ermittelt die Unfallüberwachungseinheit per angeschlossenem Ortungssystem, vorzugsweise GPS-Ortungssystem der Fahrzeugnavigation, die aktuelle Position des Fahrzeuges. Diese Informationen werden in Form eines Notrufs automatisch der Notrufzentrale zugeleitet, welche den Sachverhalt klärt und bei Bedarf Hilfe im In- und Ausland anfordert. Die Rettungskräfte können durch Kenntnis vom genauen Unfallort sowie Zusatzinformationen, wie Personendaten, Unfallzeitpunkt und dergleichen optimal agieren. Neben einer Aktivierung der Unfallhilfe per automatischer Sensorik ist auch ein manuelles Auslösen per Notruftaste im Fahrzeug vorgesehen. Darüber hinaus besteht die Möglichkeit, dass die Rettungsleitstelle einen Sprachkontakt zu den Insassen des Fahrzeuges aufnehmen kann, um beispielsweise weitere Informationen über die Schwere des Unfalls zu erhalten. Zu diesem Zwecke und zum Absetzen des Notrufes an die Rettungsleitstelle ist weiterhin eine Mobilfunkeinheit erforderlich, welche mit der Unfallüberwachungseinheit in Verbindung steht. Optional ist die Übermittlung von Daten anderer Bordsicherheitssysteme, wie Airbagausstattung, Sicherheitsgurtsensor, Überschlagsensor möglich, welche Rückschlüsse über die Schwere des Unfallereignisses sowie der Zahl der Insassen erlauben.

Die EP 1 814 093 A1 offenbart ein gattungsgemäßes System und Verfahren. Unmittelbar nach Auslösen des Notrufes werden die geografischen Unfallkoordinaten zusammen mit Identifikationsdaten des Fahrzeuges von einer Mobilfunkeinheit in digitaler Form über ein Mobilfunknetz zu der zentralen Rufeinheit in Form einer digitalen Datennachricht übertragen. Hierfür kann beispielsweise der SMS-Standard verwendet werden. Die so übertragenen Daten werden von der zentralen Rufeinheit zu einem Meldebild aufbereitet und auf einer zugriffsgeschützten Internetseite bereitgestellt, die mit grafischem Kartenmaterial versehen ist, aus dem ersichtlich ist, wo sich das Fahrzeug befindet. Zusätzlich können durch einen Telefonanruf ergänzende Informationen an eine lokalen Notrufabfragestelle des Fahrzeuges oder durch eine zentrale Notrufabfragestelle, welche die lokale Rettungsleitstelle durch einen Telefonanruf informiert, übermittelt werden. Das Abfragen des Meldebilds erfolgt hier über das Internet durch die örtlich zuständige lokale Rettungsleitstelle nach Authentifizierung am Internetserver.

Nachteilig bei dieser technischen Lösung erweist sich die vollständig grafische Kommunikation per Meldebild, was die Übertragung wichtiger Zusatzinformationen wegen des grafisch festgelegten Datenformats erschwert. Ferner ist ein Internetzugang und weitere gerätetechnische Ausrüstung erforderlich.

Das Dokument EP 1494492 offenbart ein Verfahren für das Übertragen und Verarbeiten eines Notrufs.

Es ist daher die Aufgabe der vorliegenden Erfindung, ein gattungsgemäßes Verfahren bzw. System zum Absetzen eines Notrufes von einem verunfallten Fahrzeug an eine Notrufzentral derart weiter zu verbessern, dass mit minimalem technischen Aufwand eine effiziente Notfalllogistik sichergestellt werden kann.

Die Aufgabe wird durch ein Verfahren nach Anspruch 1 gelöst. Systemtechnisch wird die Aufgabe durch Anspruch 6 gelöst.

Die Erfindung schließt die verfahrenstechnische Lehre ein, dass nach Detektion eines Unfalls des Fahrzeuges über eine entsprechende Sensorik einer automatischen Unfallüberwachungseinheit im Fahrzeug und nach Feststellen der zugeordneten aktuellen geografischen Unfallkoordinaten des Fahrzeuges per Fahrzeugnavigationseinheit erfindungsgemäß ein Notruf in spezieller Textform erstellt wird, der neben den festgestellten Unfallkoordinaten des Fahrzeugs zwecks Datensatzkennung mit dem amtlichen Kennzeichen des Fahrzeugs versehen ist, um diesen Notruf über ein geeignetes Übermittlungsprotokoll via Mobilfunkkanal an die Notrufzentrale weiterzugeben.

An dieser Stelle sei darauf hingewiesen, dass im Kontext der vorliegenden Erfindung der Ausdruck "geografische Unfallkoordinaten" im Zusammenhang mit einem Ortungssystem gewonnen werden, welche zu den globalen Satellitennavigationssystemen (GMSS) gehören, wie beispielsweise GPS, Gallileo, GLONASS (Russland), Compass (China), IRNSS (Indien) und dergleichen.

Im Rahmen der vorliegenden Erfindung werden hierunter vorzugsweise Koordinaten verstanden, welche eine GPS-Fahrzeugnavigationseinheit ausgibt. Es ist auch denkbar, dass an Stelle geografischer Unfallkoordinaten direkt eine kartografische Unfallposition des Fahrzeugs, welche von der Fahrzeugsnavigationseinheit gerechnet wird, Bestandteil des Notrufs in Textform ist. Unter dem Begriff "kartografische Unfallposition" wird dabei eine Art Postadresse, wie Land, Ort, Strasse, Hausnummer oder Kilometermarke auf der Autobahn verstanden.

Als "Notrufzentrale" wird des Weiteren eine zentrale Einheit in einem Notrufsystem verstanden, welche manuell oder auch voll automatisch durch Computertechnik arbeitend abgesetzten Notrufe von verunfallten Fahrzeugen entgegennimmt, diese datenverarbeitet und an eine Notrufleitstelle zur Koordinierung der Aktion von Rettungsfahrzeugen oder direkt an Rettungsfahrzeuge der Nähe des Unfallorts weiterleitet, welche insoweit eine mobile Notrufleitstelle bilden. Eine stationäre Rettungsleitstelle könnte beispielsweise die Unfallstation eines Krankenhauses sein, welche mit Kommunikationstechnik ausgestattet ist, um eingehende Unfallmitteilungen seitens der Notrufleitstelle logistisch zu koordinieren, damit eine schnelle Hilfe am Unfallort erfolgen kann.

Der Vorteil der erfindungsgemäßen Lösung besteht insbesondere darin, dass zu deren Umsetzung besondere technische Ausstattungen seitens der Notrufleitstelle oder der Rettungsleitstelle nicht vorgenommen werden müssen, da der Notruf vorzugsweise in menschenlesbarer standardisierter Textform gebracht wird. Vorzugsweise eignet sich der in der Mobilfunktechnik verbreitete SMS-Standrad zum Absetzen des Notrufs in der erfindungsgegenständlichen Textform. Daneben ist es jedoch auch denkbar, andere mobile Datenübertragungsstandards auf Basis von beispielsweise GPRS (General Paket Data Service), UUS (User-Two-User-Signaling), USSD (Unstructured Supplementary Service Data) oder UMTS (Universal Mobile Telecommunications System) sowie entsprechende Mobilfunknetz-Gateways zur Notrufleitstelle zu nutzen.

Gemäß einer die Erfindung verbessernden Maßnahme wird vorgeschlagen, dass der in Textform vorliegende Notruf durch die Notrufzentrale oder einer unmittelbar vorgeschalteten zentralen Einheit in eine Sprachinformation konvertiert wird, um den das Kennzeichen des Fahrzeugs beinhaltenden Notruf per Sprachkanal an eine zuständige Notrufleitstelle oder direkt an Rettungsfahrzeuge - je nach Systemstruktur - weiterzuleiten.

Mit einer derartigen Textkonvertierung (Text-to-Speech) ist eine Medienkonvertierung gemeint, also die Überführung, Umwandlung oder Konvertierung einer Datei von einem Dateiformat in ein anderes. Das gilt für den Transfer von Daten zwischen unterschiedlichen Medien und Dateisystemen ebenso wie für die Übertragung von Daten von einem Speichermedium auf ein anderes. Die empfangenen Textdaten werden beispielsweise in Videodaten oder Audiodaten umgewandelt, die von vielen Endgeräten, wie beispielsweise Mobiltelefonen, akustisch bzw. aktustisch-visuell dargestellt werden können. Diese Medienkonvertierung kann beispielsweise auch manuell erfolgen, indem ein Operator den Text lesend in Sprache umwandelt, welche per Mikrofon aufgenommen und weitergeleitet wird. Daneben ist es jedoch auch denkbar, dass die Medienkonvertierung voll automatisch per Computer unter Nutzung allgemeiner bekannter Text-To-Speech-Software erfolgt.

Wird die kartografische Unfallposition des Fahrzeugs nicht bereits durch den Notruf übertragen, sondern nur die geografischen Unfallkoordinaten, so ist es gemäß einer alternativen Ausführungsform der Erfindung auch möglich, die kartografische Unfallposition an zentraler Stelle durch die Notrufzentrale zuzuordnen. Insoweit werden die geografischen Unfallkoordinaten des Fahrzeuges, welche mit dem Notruf eingehen, mittels einer digitalen Karte in eine kartografische Unfallposition, umfassend eine Adressangabe, umgesetzt.

Insbesondere diese alternative Ausführungsform eröffnet die Möglichkeit, aus einer der Notrufzentrale zugeordneten zentralen Informationsdatenbank anhand der Datensatzkennung in Form des amtlichen Kennzeichens des Fahrzeuges weiteres fahrzeug- oder halterspezifische Ergänzungsinformationen dem Notruf zuzuordnen, um vorteilhafterweise den anstehenden Rettungseinsatz besser planen zu können. Derartige Ergänzungsinformationen können beispielsweise sein: Fahrzeugtyp, zugelassene Personenzahl und/oder Fahrzeugfarbe. Insbesondere über die Fahrzeugfarbe spielt bei der Zuordnung eines Notrufs zu einem auslösenden verunfallten Fahrzeug eine wesentliche Rolle, da diese Information am Unfallort eine schnelle Identifizierung ermöglicht.

Vorzugsweise sollte die erfindungsgegenständliche Datensatzkennung in Form eines Präfix des in Textform erstellten Notrufes ausgeführt sein. Insoweit kann die Datensatzkennung datenbanktechnisch als Identifizierungsschlüssel verwendet werden.

Weitere, die Erfindung verbessernde Maßnahmen werden nachstehend gemeinsam mit der Beschreibung eines bevorzugten Ausführungsbeispiels anhand der Figuren näher dargestellt.

Es zeigt:
- Fig.1: eine schematische Darstellung eines Systems zum Absetzen eines Notrufs von einem verunfallten Fahrzeug an eine Notrufzentrale, und
- Fig.2: ein Flussdiagramm eines über das System gemäß Fig.1 durchgeführten Verfahrens zum Absetzen des Notrufs.

Die Darstellungen in den Figuren sind schematisch und nicht maßstäblich.

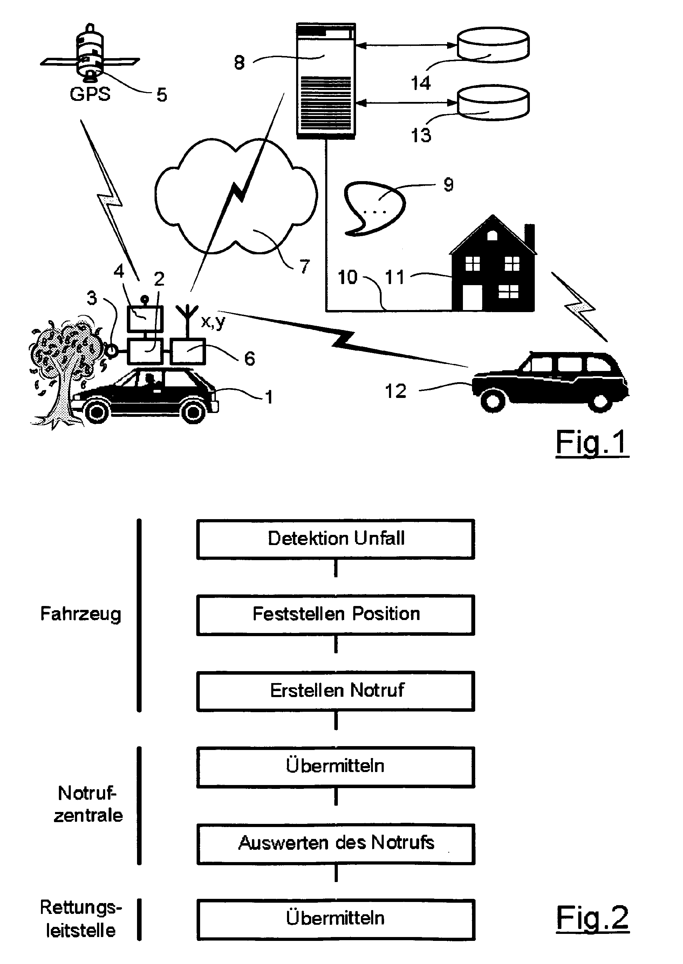

Gemäß Fig.1 enthält ein verunfalltes Fahrzeug 1 einer Unfallsüberwachungseinheit 2, welche als Elektronikbox ausgeführt ist und über das Bordnetzsystem des Fahrzeugs 1 spannungsversorgt wird. Die Unfallüberwachungseinheit 2 steht eingangsseitig mit einer Sensorik 3 in Verbindung, welche das Unfallereignis detektiert. Die Sensorik 3 ist hier als Beschleunigungssensor zur Feststellung einer negativen Beschleunigung in Folge des ruckartigen Stoppens des Fahrzeugs 1 durch Unfall ausgeführt. Hierdurch ausgelöst, werden von der Unfallüberwachungseinheit 2 die geografischen Unfallkoordinaten des Fahrzeugs 1 erfasst. Zu diesem Zwecke steht die Unfallüberwachungseinheit 2 eingangsseitig mit einer Fahrzeugnavigationseinheit 4 in Verbindung. Die Fahrzeugnavigationseinheit 4 stellt die geografischen Unfallkoordinaten über GPS-Satelliten 5 fest. Ausgangsseitig der Unfallüberwachungseinheit 2 ist eine Mobilfunkeinheit 6 des Fahrzeugs 1 angeschlossen, mit welcher der Notruf drahtlos per Mobilfunknetz 7 in Textform an eine Notrufzentrale 8 übermittelt wird. Die Mobilfunkeinheit 6 kann auch Teil der Unfallüberwachungseinheit 2 sein. Die Unfallüberwachungseinheit 2 im Fahrzeug 1 beinhaltet elektronische Mittel zum Erstellen des Notrufes nach Detektion eines Unfalls, welcher in Textform ausgegeben wird. Neben den festgestellten Unfallkoordination xy, welche von der Fahrzeugnavigationseinheit 4 bezogen werden, wird die Textform des Notrufs mit einer speziellen Datensatzkennung versehen. Diese Datensatzkennung entspricht dem amtlichen Kennzeichen des Fahrzeugs 1 und dient der Datensatzidentifikation. Bei diesem Ausführungsbeispiel wird das amtliche Kennzeichen als Buchstaben - und Zahlenfolge unter Weglassung von Leerzeichen und Sonderzeichen dem Notrufdatensatz vorangestellt. Dabei wird auch das Länderkürzel (D) - beispielsweise für Deutschland - des Fahrzeugs 1 berücksichtigt, welches angibt, in welchem Land das Fahrzeug 1 zugelassen ist. Diese Datensatzkennung ist insgesamt als Präfix dem in Textform erstellten Notruf vorangestellt.

Der Notruf wird bei diesem Ausführungsbeispiel per SMS über das Mobilfunknetz 7 an die Notrufzentrale 8 gesendet. Die Notrufzentrale 8 ist in diesem Ausführungsbeispiel als Computer ausgeführt. Auf diesem ist eine Text-To-Speech- Applikation installiert. Diese dient der Konvertierung des Notrufs in eine Sprachinformation 9. Anschließend wird der das Kennzeichen des Fahrzeuges 1 beinhaltende Notruf per Sprachkanal 10 an eine zuständige Rettungsleitstelle 11 übertragen. Die Rettungsleitstelle 11 koordiniert anschließend den Einsatz von Rettungsfahrzeugen 12 zwecks Hilfeleistung am Unfallort des Fahrzeugs 1. Die Notrufzentrale 8 kann auch Teil der Rettungsleitstelle 11 sein.

Zur verständlicheren Kommunikation des Unfallorts ordnet bei diesem Ausführungsbeispiel die Notrufzentrale 8 die empfangenen geografischen Unfallkoordinaten x, y des Fahrzeuges 1 mittels einer hierin implementierten digitalen Karte 13 einer kartografischen Unfallposition, umfassend eine Adressangabe zu. Diese wird anschließend an die Rettungsleitstelle 11 sprachübertragen.

Zusätzlich ist der Notrufzentrale 8 eine zentrale Informationsdatenbank 14 zugeordnet, welche fahrzeug- oder halterspezifische Ergänzungsinformationen für den Notruf, wie insbesondere Fahrzeugtyp, Sitzplatzanzahl und/oder Fahrzeugfarbe, enthält. Anhand der Datensatzkennung können diese Ergänzungsinformationen dem Notruf angehängt werden zur Sprachübertragung an die Rettungsleitstelle 11.

Gemäß Fig.2 erfolgt das Absetzen eines Notrufs von einem verunfallten Fahrzeug nach Maßgabe der folgenden Verfahrensschritte:

Zunächst erfolgt eine Detektion des Unfalls des Fahrzeuges über die vorstehend beschriebene Sensorik durch die Unfallüberwachungseinheit im Fahrzeug. Anschließend erfolgt ein Feststellen der zugeordneten geografischen Unfallkoordinaten x, y des Fahrzeuges unter Nutzung der im Fahrzeug implementierten Fahrzeugnavigation. Anschließend wird ein Erstellen des Notrufs in einer speziellen Textform durch die Unfallüberwachungseinheit vorgenommen, indem die festgestellten Unfallkoordinaten mit einer Datensatzkennung verknüpft werden, welche dem amtlichen Kennzeichen des Fahrzeuges entspricht. Dann wird ein Übermitteln in dieser Textform des Notrufs per Mobilfunkkanal an die Notrufzentrale durchgeführt. Nachfolgend wird der Notruf ausgewertet, um ihn an eine zuständige Rettungsleitstelle zu übermitteln.

Die erfindungsgemäße Lösung ist nicht beschränkt auf die Darstellungen im vorstehend beschriebenen Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass direkt im Fahrzeug die Unfallkoordinaten in eine kartografische Unfallposition (Adressangabe) konvertiert werden, indem die Fahrzeugnavigationseinheit hierfür genutzt wird. Allerdings ist dabei sicherzustellen, dass diese Rechenoperation an Bord des Fahrzeuges trotz des Unfalls noch durchgeführt werden kann. Ferner ist es auch denkbar, die Notrufzentrale manuell zu besetzen und die vorzugsweise per SMS eingehenden Notrufe durch einen Operator direkt in Sprache zur Kommunikation mit der zuständigen Rettungsleitstelle umzusetzen. Diese Alternative gestattet es, flexibel auch Ergänzungsinformationen in den Notruf mit einfließen zu lassen, welche aus ergänzenden Informationsdatenbanken bezogen werden könnte, beispielsweise fahrzeug- oder halterspezifische Informationen. Darüber hinaus ist die erfindungsgemäße Lösung flexibel hinsichtlich der Telekommunikationsnetze. Beispielsweise kann die Rettungsleitstelle auch mobil in einem Fahrzeug integriert sein, so dass sich zur Übertragung der Sprachinformation von der Notrufzentrale zur mobilen Rettungsleitstelle auch das Mobilfunknetz eignet.

Schließlich sei darauf hingewiesen, dass die Begriffe "umfassen" und "aufweisen" keine anderen Elemente oder Schritte ausschließen und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Alternativen verwendet werden können. Bezugszeichen in den Ansprüchen sind nicht als Einschränkungen anzusehen.

### Bezugszeichenliste

- **1**: Fahrzeug
- **2**: Unfallüberwachungseinheit
- **3**: Sensorik
- **4**: Fahrzeugnavigationseinheit
- **5**: GPS-Satellit
- **6**: Mobilfunkeinheit
- **7**: Mobilfunknetz
- **8**: Notrufzentrale
- **9**: Sprachinformation
- **10**: Sprachkanal
- **11**: Rettungsleitstelle
- **12**: Rettungsfahrzeug
- **13**: digitale Karte
- **14**: Informationsdatenbank

- **x,y**: Unfallkoordinaten
- **D**: Länderkürzel

## Patentansprüche

1. Verfahren zum Absetzen eines Notrufs von einem verunfallten Fahrzeug (1) an eine Notrufzentrale (8), aufweisend die Schritte:
- Detektion eines Unfalls des Fahrzeugs (1) über eine Sensorik (3) einer automatischen Unfallüberwachungseinheit (2) im Fahrzeug (1),
- Feststellen der zugeordneten geographischen Unfallkoordinaten (x,y) des Fahrzeugs (1) per Fahrzeugnavigationseinheit (4)
- Erstellen eines Notrufs in Textform, umfassend die festgestellten Unfallkoordinaten (x,y) des Fahrzeugs (1), die zwecks Datensatzkennung mit dem amtlichen Kennzeichen des Fahrzeugs (1) versehen wird, zum
- Übermitteln der Textform des Notrufs via Mobilfunkkanal zum Empfang für die Notrufzentrale (8) und dass der in Textform abgesetzte Notruf in einem menschen-lesbaren standardisierten Datenformat an die Notrufzentrale (8) gesendet wird, **dadurch gekennzeichnet,**
**dass** die Textform des Notrufs durch die Notrufzentrale (8) selbst oder einer unmittelbar vorgeschalteten zentralen Einheit in eine Sprachinformation (9) konvertiert wird, um den das Kennzeichen des Fahrzeuges (1) beinhaltenden Notruf per Sprachkanal an eine zuständige Rettungsleitstelle (11) oder ein Rettungsfahrzeug (12) weiterzuleiten.

2. Verfahren nach Anspruch 2,
**dadurch gekennzeichnet, dass** der in Textform abgesetzte Notruf per SMS an die Notrufzentrale (8) gesendet wird.

3. Verfahren nach Anspruch 1,
**dadurch gekennzeichnet, dass** den geographischen Unfallkoordinaten (x,y) des Fahrzeugs (1) mittels digitaler Karte (14) eine kartographische Unfallposition, umfassend eine Adressangabe, zugeordnet wird.

4. Verfahren nach Anspruch 3,
**dadurch gekennzeichnet, dass** die Gewinnung der kartographische Unfallposition im Fahrzeug (1) durch Nutzung einer bordeigenen Fahrzeugnavigationseinheit (4) durchgeführt wird.

5. Verfahren nach Anspruch 1,
**dadurch gekennzeichnet, dass** aus einer der Notrufzentrale (8) zugeordneten zentralen Informationsdatenbank (14) anhand der Datensatzkennung fahrzeug- oder halterspezifische Ergänzungsinformationen dem Notruf angehängt werden.

6. System zum Absetzen eines Notrufs von einem verunfallten Fahrzeug (I) an eine Notrufzentrale (8), umfassend:
- eine automatische Unfallüberwachungseinheit (2) im Fahrzeug (1) mit einer Sensorik (3) zur Detektion eines Unfalls des Fahrzeugs (1),
- eine Fahrzeugnavigationseinheit (4) zum Feststellen der zugeordneten geographischen Unfallkoordinaten (x,y) des Fahrzeugs (1),
- elektronische Mittel zum Erstellen eines Notrufs in Textform, umfassend zumindest die festgestellten Unfallkoordinaten (x,y) des Fahrzeugs (1), der zwecks Datensatzkennung das amtliche Kennzeichen des Fahrzeugs (1) umfasst,
- eine Mobilfunkeinheit (7) zum Übermitteln der Textform des Notrufs zum Empfang für die Notrufzentrale (8). **gekennzeichnet durch**:
die Datensatzkennung in Form eines Präfix des in Textform erstellten Notrufs ausgeführt ist.

7. System nach Anspruch 6,
**dadurch gekennzeichnet, dass** die Datensatzkennung ein Länderkürzel (D) des Fahrzeugs (1) mit umfasst.

8. System nach Anspruch 7,
**dadurch gekennzeichnet, dass** die fahrzeug- oder halterspezifische Ergänzungsinformationen ausgewählt sind aus einer Gruppe, umfassend Fahrzeugtyp, zugelassene Personenanzahl, Fahrzeugfarbe.

## Claims

1. Method for transmitting an emergency call from a vehicle (1) in an accident to an emergency call center (8), exhibiting the steps:
- detection of an accident of the vehicle (1) via a sensor system (3) of an automatic accident monitoring unit (2) in the vehicle (1),
- determining the associated geographic accident coordinates (x,y) of the vehicle (1) by vehicle navigation unit (4),
- generating an emergency call in text form, comprising the accident coordinates (x,y) determined for the vehicle (1), which is provided with the official license number of the vehicle (1) for the purpose of dataset identification, for
- transmitting the text form of the emergency call via mobile radio channel for reception for the emergency call center (8),
and in that the emergency call transmitted in text form is sent to the emergency call center (8) in a man-readable standardized data format, **characterized in that** the text form of the emergency call is converted into voice information (9) by the emergency call center (8) itself or an immediately preceding central unit, in order to forward the emergency call containing the license number of the vehicle (1) to a responsible rescue coordination center (11) or a rescue vehicle (12) by voice channel.

2. Method according to Claim 1,
**characterized in that** the emergency call transmitted in text form is sent by SMS to the emergency call center (8).

3. Method according to Claim 1,
**characterized in that** a cartographic accident position comprising an address specification is allocated to the geographic accident coordinates (x,y) of the vehicle (1) by means of a digital map (14).

4. Method according to Claim 3,
**characterized in that** the cartographic accident position is obtained in the vehicle (1) by utilizing an on-board vehicle navigation unit (4).

5. Method according to Claim 1,
**characterized in that** vehicle- or keeper-specific supplementary information is appended to the emergency call by means of the dataset identification from a central information database (14) allocated to the emergency call center (8).

6. System for transmitting an emergency call from a vehicle (1) in an accident to an emergency call center (8), comprising:
- an automatic accident monitoring unit (2) in the vehicle (1) with a sensor system (3) for detecting an accident of the vehicle (1),
- a vehicle navigation unit (4) for determining the associated geographic accident coordinates (x,y) of the vehicle (1),
- electronic means for generating an emergency call in text form, comprising at least the accident coordinates (x,y) determined for the vehicle (1), which comprises the official license number of the vehicle (1) for the purpose of dataset identification,
- a mobile radio unit (7) for transmitting the text form of the emergency call for the reception for the emergency call center (8),
**characterized by**: the dataset identification is executed in the form of a prefix of the emergency call generated in text form.

7. System according to Claim 6,
**characterized in that** the dataset identification also comprises a country code (D) of the vehicle (1).

8. System according to Claim 7,
**characterized in that** the vehicle- or keeper-specific supplementary information is selected from a group comprising vehicle type, licensed number of persons, vehicle color.

## Revendications

1. Procédé d'envoi d'un appel de secours par un véhicule accidenté (1) à une centrale (8) d'appels de secours, le procédé présentant les étapes qui consistent à :
détecter un accident du véhicule (1) par l'intermédiaire d'un ensemble (3) de détecteurs d'une unité (2) de surveillance automatique des accidents prévue dans le véhicule (1),
déterminer à l'aide de l'unité de navigation (4) du véhicule les coordonnées géographiques (x, y) associées à l'accident du véhicule (1),
établir un appel de secours sous forme de texte qui comprend les coordonnées (x, y) constatées de l'accident du véhicule (1) et qui est doté du numéro d'immatriculation du véhicule (1) pour permettre l'identification du jeu de données et
transmettre sous forme de texte l'appel de secours par un canal de radiotéléphonie mobile en vue de sa réception pour la centrale (8) d'appels de secours, l'appel de secours envoyé sous forme de texte étant envoyé à la centrale (8) d'appels de secours sous un format de données standardisé lisible par l'homme, **caractérisé en ce que**
la forme de texte de l'appel de secours est convertie par la centrale (8) de secours elle-même ou par une unité centrale raccordée immédiatement en amont en une information vocale (9) pour transmettre l'appel de secours contenant la caractérisation du véhicule (1) par canal vocal au site (11) responsable de la direction des secours ou à un véhicule de secours (12).

2. Procédé selon la revendication 1, **caractérisé en ce que** l'appel de secours envoyé sous forme de texte est envoyé par SMS à la centrale (8) d'appels de secours.

3. Procédé selon la revendication 1, **caractérisé en ce que** la position cartographique de l'accident comprenant des données d'adresse est associée aux coordonnées géographiques (x, y) de l'accident du véhicule (1) au moyen d'une carte numérique (14).

4. Procédé selon la revendication 3, **caractérisé en ce que** l'obtention de la position cartographique de l'accident est réalisée dans le véhicule (1) en recourant à une unité de navigation (4) embarquée dans le véhicule.

5. Procédé selon la revendication 1, **caractérisé en ce que** des informations complémentaires concernant le véhicule ou son détenteur sont annexées à l'appel de secours par l'intermédiaire de l'identification du jeu de données dans une base de données centrales d'informations (14) associée à la centrale (8) d'appels de secours.

6. Système d'envoi d'un appel de secours par un véhicule accidenté (1) à une centrale (8) d'appels de secours, le système comportant :
une unité (2) de surveillance automatique des accidents prévue dans le véhicule (1) et dotée d'un ensemble (3) de détecteurs qui détecte un accident du véhicule (1),
une unité de navigation (4) du véhicule qui détermine les coordonnées géographiques (x, y) associées à l'accident du véhicule (1),
des moyens électroniques qui établissent un appel de secours sous forme de texte qui comprend au moins les coordonnées constatées (x, y) de l'accident du véhicule (1) et qui comportent la plaque d'immatriculation du véhicule (1) pour permettre l'identification du jeu de données,
une unité (7) de radiotéléphonie mobile qui transmet l'appel de secours sous forme de texte en vue de sa réception pour la centrale (8) d'appels de secours,
**caractérisé en ce que**
l'identification du jeu de données est réalisée sous la forme d'un préfixe de l'appel de secours établi sous forme de texte.

7. Système selon la revendication 6, **caractérisé en ce que** l'identification du jeu de données comporte l'abréviation (D) du pays d'origine du véhicule (1).

8. Système selon la revendication 7, **caractérisé en ce que** les informations complémentaires concernant le véhicule ou son détenteur sont sélectionnées dans un ensemble qui comprend le type de véhicule, le nombre de passagers admissibles et la couleur du véhicule.
